# EUROPEAN PATENT SPECIFICATION

(11) **EP 3 330 675 B1**
(45) Date of publication and mention of the grant of the patent: **29.01.2020**
(21) Application number: 16832748.4
(22) Date of filing: 19.07.2016
(51) Int. Cl.: G01D 5/14, B62K 23/04, G01B 7/30

(54) **RELATIVE POSITION DETECTION DEVICE, ACCELERATOR POSITION SENSOR AND VEHICLE**
VORRICHTUNG ZUR BESTIMMUNG DER RELATIVEN POSITION, GASPEDALPOSITIONSSENSOR UND FAHRZEUG
DISPOSITIF DE DÉTECTION DE POSITION RELATIVE, CAPTEUR DE POSITION D'ACCÉLÉRATEUR ET VÉHICULE

(30) Priority: 04.08.2015 JP 2015154034
(43) Date of publication of application: 06.06.2018
(73) Proprietor: Yamaha Hatsudoki Kabushiki Kaisha, Iwata-shi, Shizuoka 438-8501 (JP)
(72) Inventor: HINO, Haruyoshi, Iwata-shi Shizuoka 438-8501 (JP)
(74) Representative: Zimmermann, Tankred Klaus
(86) International application number: PCT/JP2016/071120
(87) International publication number: WO 2017/022469

(56) References cited:
- JP-A- H11 160 010
- JP-A- S62 229 002
- JP-A- 2006 112 284
- JP-A- 2009 014 716

## Description

### Technical Field

The present teaching relates to a relative position detection device, an accelerator position sensor, and a vehicle.

### Background Art

The prior art document JP2006/112284A discloses a relative position detection apparatus according to the preamble of claim 1.

A relative position detection device disclosed in Patent Literature 1 (PTL 1) is conventionally known. The relative position detection device includes a magnet and a Hall IC that are displaceable relative to each other. The Hall IC is arranged in a range where the magnetic flux density of the magnet monotonically varies. The Hall IC detects a variation in the magnetic flux density of the magnet. To be specific, the Hall IC outputs a voltage that is proportional to the magnitude of the magnetic flux density of the magnet. The magnet has a slant face so that the thickness of the magnet decreases toward its end face in a relative displacement direction. The relative position detection device disclosed in the Patent Literature 1 can effectively widen a detection range for a relative displacement between the magnet and the Hall IC, without the need to increase the length of the magnet.

### Citation List

### Patent Literature

PTL 1: Japanese Patent Application Laid-Open No. 2006-112880

### Summary of Invention

### Technical Problem

In Patent Literature 1, the Hall IC is arranged in a range where the magnetic flux density of the magnet monotonically varies. In the range where the magnetic flux density of the magnet monotonically varies, the amount of relative displacement between the Hall IC and the magnet is substantially proportional to an output voltage of the Hall IC. In the range where the magnetic flux density of the magnet monotonically varies, therefore, the amount of relative displacement between the Hall IC and the magnet is detected easily and accurately. It is thus desirable that the magnetic flux density of the magnet monotonically varies over a wide range within a range of magnetic flux densities detectable by the Hall IC. The reason therefor is because the amount of relative displacement between the Hall IC and the magnet can be detected easily and accurately over a wide range. In addition, it is desirable that a variation in the magnetic flux density of the magnet detected by the Hall IC is small relative to the amount of relative displacement between the Hall IC and the magnet. The reason therefor is because the resolution in the amount of relative displacement is increased over a wide range. In these respects, the relative position detection device disclosed in Patent Literature 1 leaves room for improvement.

An object of the present teaching is to provide a relative position detection device that is able to easily and accurately detect the amount of relative displacement between a permanent magnet part and a magnetic sensor over a wide range, and also able to increase the resolution in the amount of relative displacement, with suppression of a size increase of the permanent magnet part. Another object of the present teaching is to provide an accelerator position sensor including the relative position detection device. Still another object of the present teaching is to provide a vehicle including the accelerator position sensor.

### Solution to Problem

The present teaching can adopt the following configurations.
(1) A relative position detection device including a permanent magnet part and a magnetic sensor that are arranged so as to be displaceable relative to each other,
   the magnetic sensor facing the permanent magnet part with a gap therebetween, being configured to detect a variation in a magnetic flux density of the permanent magnet part without contacting the permanent magnet part, and having an upper limit value and a lower limit value of a detectable magnetic flux density,
   the permanent magnet part having at least two magnetic pole parts, each of the two magnetic pole parts being magnetized in a facing direction in which the permanent magnet part and the magnetic sensor face each other such that each of the two magnetic pole parts has a N-pole and a S-pole juxtaposed in the facing direction,
   the permanent magnet part being configured such that the two magnetic pole parts are juxtaposed in a relative displacement direction in which the permanent magnet part and the magnetic sensor are displaced relative to each other and such that magnetic poles of the respective two magnetic pole parts facing the magnetic sensor have different polarities,
   the permanent magnet part having a middle portion including a boundary between the two magnetic pole parts and two non-middle portions adjacent to the respective sides of the middle portion in the relative displacement direction, the permanent magnet part being configured such that at least one of the non-middle portions faces the magnetic sensor when the permanent magnet part and the magnetic sensor are displaced relative to each other ,
   the permanent magnet part being configured such that the middle portion and, of the two non-middle portions, the non-middle portion capable of facing the magnetic sensor satisfy a requirement concerning a cross-sectional area and a requirement concerning a distance to the magnetic sensor, the permanent magnet part having an arc-like shape protruding toward the magnetic sensor, the permanent magnet part and the magnetic sensor having a radial gap therebetween, one of the permanent magnet part and the magnetic sensor being displaced relative to the other by a rotation about an axis line, the requirement concerning the cross-sectional area being that a cross-sectional area of the middle portion on a plane perpendicular to the relative displacement direction is smaller than a cross-sectional area of the non-middle portion on a plane perpendicular to the relative displacement direction, and the requirement concerning the distance to the magnetic sensor being that a distance between the middle portion and the magnetic sensor at a time when the middle portion and the magnetic sensor are aligned in the facing direction is longer than a distance between the non-middle portion and the magnetic sensor at a time when the non-middle portion and the magnetic sensor are aligned in the facing direction.
   Hereinafter, the requirement concerning the cross-sectional area will also be referred to as cross-sectional area requirement. The requirement concerning the distance to the magnetic sensor will be also referred to as distance requirement.
   The relative position detection device of (1) is provided with the permanent magnet part of which the middle portion and the non-middle portion capable of facing the magnetic sensor satisfy at least one of the cross-sectional area requirement and the distance requirement. The relative position detection device of (1) can, therefore, widen a range in which the magnetic flux density of the permanent magnet part monotonically varies within a range of magnetic flux densities detectable by the magnetic sensor, with suppression of a size increase of the permanent magnet part. Moreover, the relative position detection device of (1) can reduce a variation in the magnetic flux density of the permanent magnet part detected by the magnetic sensor relative to the amount of relative displacement between the magnetic sensor and the permanent magnet part, with suppression of a size increase of the permanent magnet part. Accordingly, the relative position detection device of (1) can easily and accurately detect the amount of relative displacement between the permanent magnet part and the magnetic sensor over a wide range, and can also increase the resolution in the amount of relative displacement, with suppression of a size increase of the permanent magnet part.
   The relative position detection device of (1) can detect the rotation angle as the amount of relative displacement. Thus, the relative position detection device of (2) can easily and more accurately detect the rotation angle of either one of the permanent magnet part and the magnetic sensor over a wide range, and also can increase the resolution in the rotation angle, with suppression of a size increase of the permanent magnet part.
   In the relative position detection device of the axis line is set at such a position that the middle portion and the non-middle portion of the permanent magnet part satisfy at least the requirement concerning the distance to the magnetic sensor.
   Such a relative position detection device of can easily and more accurately detect the rotation angle of either one of the permanent magnet part and the magnetic sensor over a wide range, and also can increase the resolution in the rotation angle, with suppression of a size increase of the permanent magnet part.
(2) The relative position detection device of (1), in which
   the permanent magnet part is configured such that the thickness of the middle portion is smaller than the thickness of the non-middle portion.
   The relative position detection device of (2) can easily and more accurately detect the amount of relative displacement between the permanent magnet part and the magnetic sensor over a wide range, and also can increase the resolution in the amount of relative displacement, with suppression of a size increase of the permanent magnet part.
(3) The relative position detection device of (1), in which
   the permanent magnet part is configured such that the width of the middle portion is smaller than the width of the non-middle portion.
   The relative position detection device of (3) can easily and more accurately detect the amount of relative displacement between the permanent magnet part and the magnetic sensor over a wide range, and also can increase the resolution in the amount of relative displacement, with suppression of a size increase of the permanent magnet part.
(4) The relative position detection device of (1), in which
   the requirement concerning the distance to the magnetic sensor is that a distance between the permanent magnet part and the magnetic sensor progressively decreases from the middle portion toward the non-middle portion, in addition to that a distance between the middle portion and the magnetic sensor at a time when the middle portion and the magnetic sensor are aligned in the facing direction is longer than a distance between the non-middle portion and the magnetic sensor at a time when the non-middle portion and the magnetic sensor are aligned in the facing direction.
   The relative position detection device of (4) can easily and more accurately detect the amount of relative displacement between the permanent magnet part and the magnetic sensor over a wide range, and also can further increase the resolution in the amount of relative displacement, with suppression of a size increase of the permanent magnet part.
(5) The relative position detection device of (1), in which
   the requirement concerning the cross-sectional area is that a cross-sectional area of the permanent magnet part on a plane perpendicular to the relative displacement direction progressively increases from the middle portion toward the non-middle portion, in addition to that a cross-sectional area of the middle portion on a plane perpendicular to the relative displacement direction is smaller than a cross-sectional area of the non-middle portion on a plane perpendicular to the relative displacement direction.
   The relative position detection device of (5) can easily and more accurately detect the amount of relative displacement between the permanent magnet part and the magnetic sensor over a wide range, and also can further increase the resolution in the amount of relative displacement, with suppression of a size increase of the permanent magnet part.
(6) The relative position detection device of (1), in which
   the non-middle portion includes an end portion of the permanent magnet part in the relative displacement direction.
   The relative position detection device of (6) can easily and more accurately detect the amount of relative displacement between the permanent magnet part and the magnetic sensor over a wide range, and also can further increase the resolution in the amount of relative displacement, with suppression of a size increase of the permanent magnet part.
(7) An accelerator position sensor including:
   the relative position detection device of any one of (1) to (6);
   a support member configured to be mounted on a handlebar, and provided with one of the permanent magnet part and the magnetic sensor; and
   an accelerator grip configured to be displaceable relative to the support member, and provided with the other of the permanent magnet part and the magnetic sensor,
   the accelerator position sensor being configured to detect a displacement of the accelerator grip relative to the support member by means of the relative position detection device.

   The accelerator position sensor of (7) can easily and accurately detect the amount of relative displacement between the accelerator grip and the handlebar over a wide range, and also can increase the resolution in the amount of relative displacement, with suppression of a size increase of the permanent magnet part. Accordingly, the accelerator position sensor of (9) can provide a widened operation angle of the accelerator grip, and also can enable a delicate accelerator operation.
(8) A vehicle including the accelerator position sensor of (7).

In the vehicle of (8), the amount of relative displacement between the accelerator grip and the handlebar can be detected easily and accurately over a wide range. In addition, the resolution in the amount of relative displacement is high. Accordingly, the vehicle of (8) can provide a widened operation angle of the accelerator grip, and also can enable a delicate accelerator operation.

### Advantageous Effects of Invention

The present teaching makes it possible to easily and accurately detect the amount of relative displacement between a permanent magnet part and a magnetic sensor over a wide range, and also to increase the resolution in the amount of relative displacement, with suppression of a size increase of the permanent magnet part.

### Brief Description of Drawings

[FIG. 1] A partial cutaway plan view schematically showing an accelerator position sensor according to a first embodiment.
[FIG. 2] A cross-sectional view as taken along the line A-A of FIG. 1.
[FIG. 3] (a) is a longitudinal cross-sectional view schematically showing an accelerator grip; and (b) is a cross-sectional view as taken along the line B-B of (a).
[FIG. 4] A perspective view schematically showing a housing piece according to the first embodiment.
[FIG. 5] A plan view schematically showing a detection unit according to the first embodiment.
[FIG. 6] (a) is a cross-sectional view schematically showing an exemplary positional relationship of a permanent magnet part to a digital Hall IC and a linear Hall IC according to the first embodiment; and (b) is a cross-sectional view of the permanent magnet part.
[FIG. 7] A cross-sectional view schematically showing an exemplary positional relationship of the permanent magnet part to the digital Hall IC and the linear Hall IC according to the first embodiment.
[FIG. 8] A cross-sectional view schematically showing an exemplary positional relationship of the permanent magnet part to the digital Hall IC and the linear Hall IC according to the first embodiment.
[FIG. 9] A cross-sectional view schematically showing an exemplary positional relationship of the permanent magnet part to the digital Hall IC and the linear Hall IC according to the first embodiment.
[FIG. 10] (a) is a graph showing a variation in a magnetic flux density relative to the position of the digital Hall IC according to the first embodiment; (b) is a graph showing a change in a first detection signal outputted from the digital Hall IC; (c) is a graph showing a variation in a magnetic flux density relative to the position of the linear Hall IC according to the first embodiment; and (d) is a graph showing a change in a second detection signal outputted from the linear Hall IC.
[FIG. 11] (a) is a graph showing the relationship of the first detection signal and the second detection signal to the rotation angle of the accelerator grip (permanent magnet part) of the accelerator position sensor according to the first embodiment; and (b) is a graph showing the relationship of a first detection signal and a second detection signal to the rotation angle of an accelerator grip (permanent magnet part) of an accelerator position sensor according to a comparative example.
[FIG. 12] An explanatory diagram schematically showing magnetic fluxes of the permanent magnet part of the accelerator position sensor according to the first embodiment.
[FIG. 13] A cross-sectional view schematically showing an exemplary positional relationship of a permanent magnet part to a digital Hall IC and a linear Hall IC according to a second embodiment.
[FIG. 14] A cross-sectional view schematically showing an exemplary positional relationship of the permanent magnet part to the digital Hall IC and the linear Hall IC according to the second embodiment.

### Description of Embodiments

On the problems described above, the inventor of the present teaching conducted the following studies.

The relative position detection device of Patent Literature 1 aims to widen a detection range for a relative displacement between the magnet and the Hall IC. In the relative position detection device according to [First Embodiment of Invention] of Patent Literature 1, the magnet has a slant face so that the thickness of the magnet decreases toward its end face in the relative displacement direction. In the relative position detection device according to [Second Embodiment of Invention] of Patent Literature 1, the magnet includes a magnetic substance provided at each end face in the relative displacement direction. This way, Patent Literature 1 is creative in the shape or structure of an end portion of the magnet in the relative displacement direction, for the purpose of widening the detection range for a relative displacement between the magnet and the Hall IC. In short, Patent Literature 1 focuses on the end portion of the magnet in the relative displacement direction. The inventor of the present teaching, at first, tried to solve the above-described problems based on such a conventional design concept. Improvement obtained by the conventional design concept focusing on the end portion of the magnet was just within expectations of those skilled in the art.

The inventor of the present teaching changed the way of thinking and overturned the conventional design concept, and focused on a magnetic field in the vicinity of a boundary between two magnetic pole parts in a case where the two magnetic pole parts are arranged in a relative displacement direction in which a permanent magnet part and a magnetic sensor are displaced relative to each other, the two magnetic pole parts being magnetized in a facing direction in which the permanent magnet part and the magnetic sensor face each other, each of the two magnetic pole parts having N-pole and S-pole juxtaposed in the facing direction. The inventor of the present teaching then conceived of appropriately setting the relationship between the cross-sectional area of a middle portion and the cross-sectional area of a non-middle portion and the relationship between the distance from the middle portion to the magnetic sensor and the distance from the non-middle portion to the magnetic sensor, the middle portion including the boundary between the two magnetic pole parts, the non-middle portion being configured to face at least the magnetic sensor. The inventor of the present teaching further found out that appropriately setting at least one of these relationships makes it possible to easily and accurately detect the amount of relative displacement between the permanent magnet part and the magnetic sensor over a wide range, and also to increase the resolution in the amount of relative displacement. The present teaching is a teaching accomplished based on the foregoing findings. The present teaching, which is based on a new idea different from the conventional design concept, can provide a degree of improvement that those skilled in the art cannot expect from the conventional design concept.

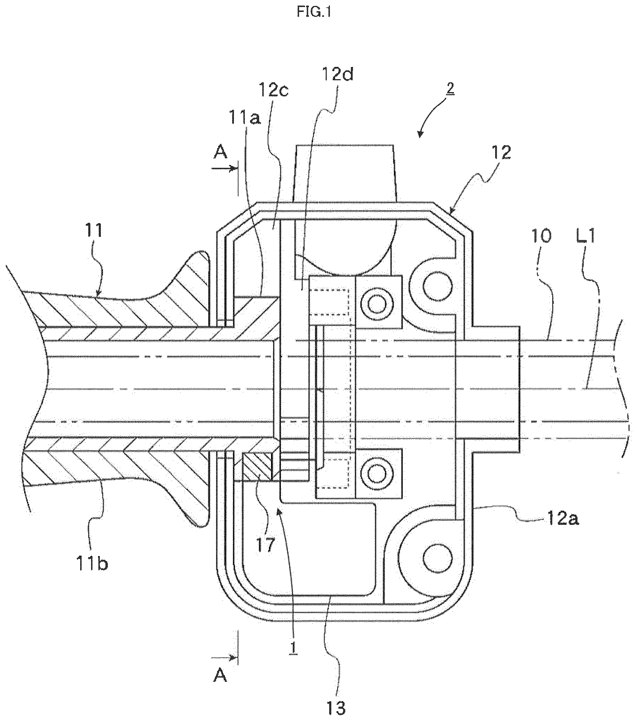

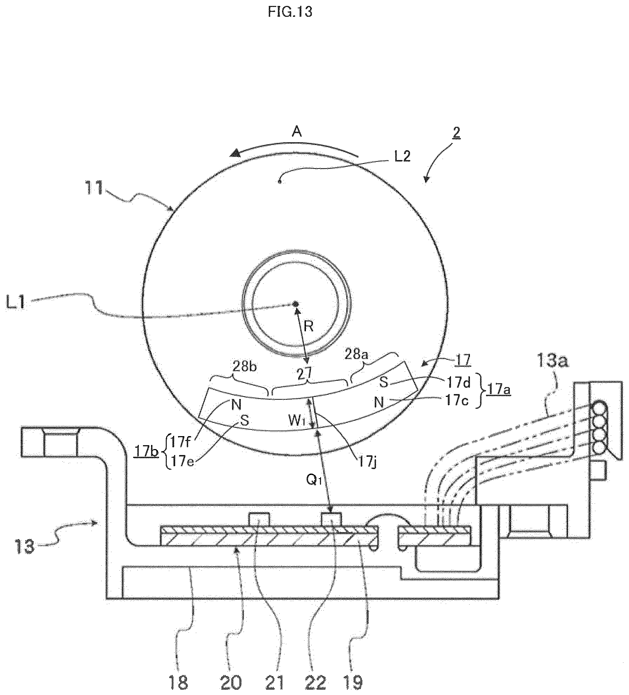

In the following, a first embodiment will be described with reference to FIG. 1 through FIG. 12. Then, a second embodiment will be described with reference to FIG. 13 through FIG. 14. In the first embodiment, both a cross-sectional area requirement and a distance requirement are satisfied. In the second embodiment, only the distance requirement of the cross-sectional area requirement and the distance requirement is satisfied. The present teaching is not limited to these examples. It may be acceptable that only the cross-sectional area requirement of the cross-sectional area requirement and the distance requirement is satisfied, for example.

### [First Embodiment]

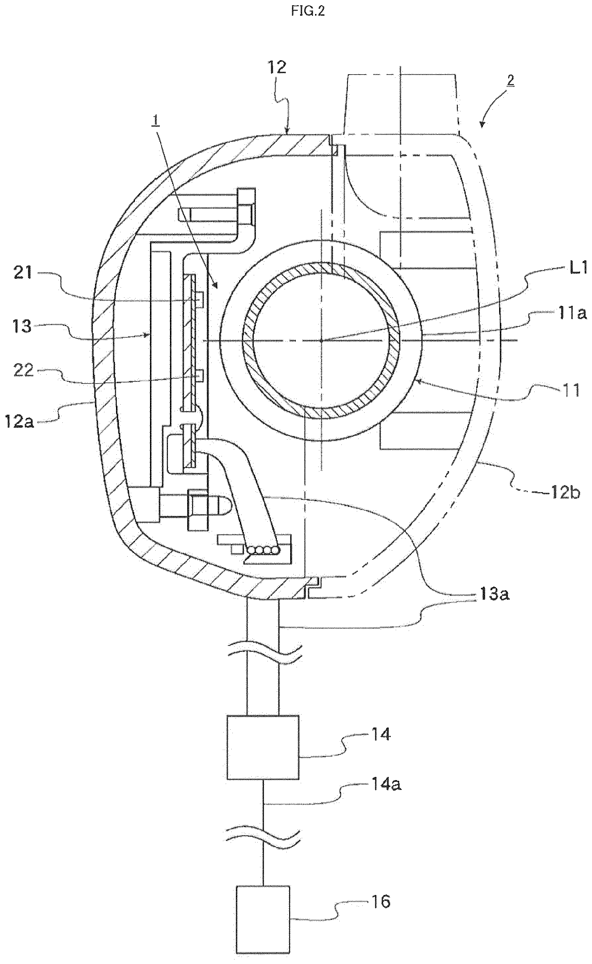

FIG. 1 is a partial cutaway plan view schematically showing an accelerator position sensor 2 according to the first embodiment. FIG. 2 is a cross-sectional view as taken along the line A-A of FIG. 1. The accelerator position sensor 2 of the first embodiment includes a relative position detection device 1. The accelerator position sensor 2 is applied to an electric motorcycle (not shown) serving as an electric straddled vehicle. The electric straddled vehicle may be an electric tricycle. A driving source of the electric straddled vehicle is a motor. The electric motorcycle is one example of the "vehicle" of the present teaching. The "vehicle" of the present teaching is not particularly limited. Examples of the vehicle may include straddled vehicles such as motorcycles or motor tricycles whose driving sources are engines.

The accelerator position sensor 2 includes an accelerator grip 11 and a housing 12. The housing 12 is one example of the "support member". The accelerator grip 11 is rotatably provided near one end portion of a handlebar 10. The housing 12 is provided on the handlebar 10. The housing 12 is arranged in a position corresponding to a tube guide portion 11a. The tube guide portion 11a of the accelerator grip 11 is formed at an end portion of the accelerator grip 11 on the side close to the center with respect to a vehicle width direction (horizontal direction in FIG. 1). The tube guide portion 11a is received in the housing 12 such that the tube guide portion 11a is rotatable relative to the housing 12. The accelerator grip 11 is provided so as to be rotatable relative to the housing 12. The accelerator grip 11 is rotatable within a predetermined range about a rotation axis line L1. The accelerator grip 11 is provided with a permanent magnet part 17.

In the housing 12, an accommodation part 12c is partitioned by a rib-like projecting portion 12d. A detection unit 13 is disposed in the housing 12. The detection unit 13 is configured to detect a relative rotation angle of the accelerator grip 11 to the housing 12. The detection unit 13 is arranged so as to face the tube guide portion 11a of the accelerator grip 11. As shown in FIG. 2, the detection unit 13 is connected to a control unit 14 provided in a vehicle body (not shown) of the electric motorcycle through a detection signal wiring 13a. The control unit 14 is connected to a driving source control unit 16 that operates a driving source (not shown) through a control signal wiring 14a.

The housing 12 includes a pair of housing pieces 12a, 12b. The housing pieces 12a, 12b are secured to each other with the handlebar 10 sandwiched therebetween from both sides of the handlebar 10 with respect to its diameter direction. The tube guide portion 11a of the accelerator grip 11 is rotatably disposed in an interior space defined by the housing pieces 12a, 12b.

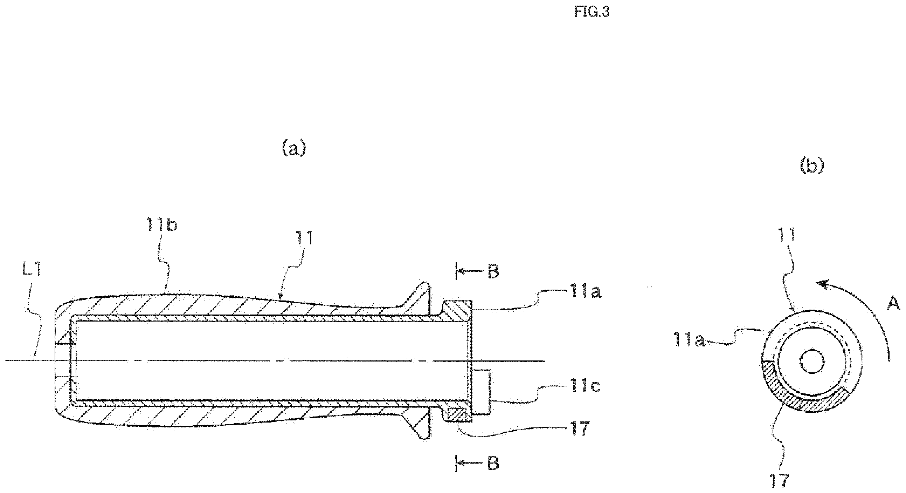

FIG. 3(a) is a longitudinal cross-sectional view schematically showing the accelerator grip 11. FIG. 3(b) is a cross-sectional view as taken along the line B-B of FIG. 3(a).

The accelerator grip 11 includes the tube guide portion 11a and a grip portion 11b. The tube guide portion 11a is disposed in the interior space of the housing 12 (see FIG. 1 and FIG. 2). The grip portion 11b is disposed outside the housing 12. The tube guide portion 11a has a rotation restricting portion 11c for restricting rotation of the accelerator grip 11. The tube guide portion 11a is provided with the permanent magnet part 17. The permanent magnet part 17 has a substantially arc-like shape centered on the rotation axis line L1 of the accelerator grip 11. The substantially arc-like shape has a central angle of, for example, 90° or more and 180° or less. The permanent magnet part 17 is provided in the tube guide portion 11a of the accelerator grip 11.

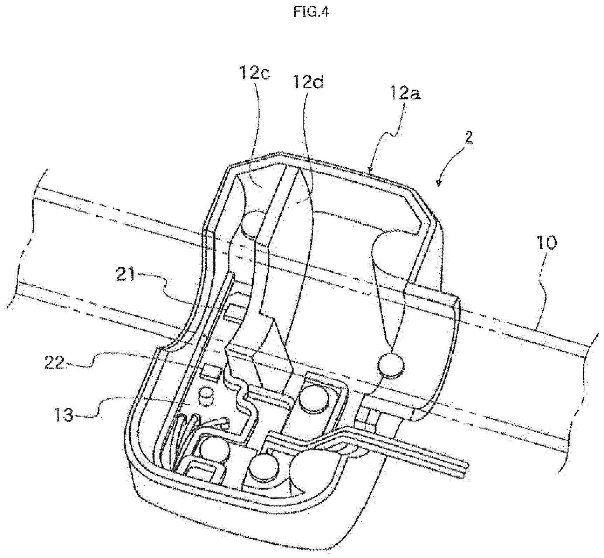

FIG. 4 is a perspective view schematically showing the housing piece 12a according to the first embodiment.

Inside the housing piece 12a, the accommodation part 12c is partitioned by the rib-like projecting portion 12d, as shown in FIG. 1 and FIG. 4. The tube guide portion 11a of the accelerator grip 11 is disposed in the accommodation part 12c. The projecting portion 12d is formed such that it is contactable with the rotation restricting portion 11c of the accelerator grip 11 when the accelerator grip 11 is rotated. As a result of the rotation restricting portion 11c being contacted by the projecting portion 12d, rotation of the accelerator grip 11 is restricted. The accelerator grip 11 is thus configured to be rotatable in a range from a full-close position θₒ to a rotation limit position θₑ through a full-open position θₘ, as will be described later. The detection unit 13 is disposed in and around the accommodation part 12c of the housing piece 12a. The detection unit 13 is configured to detect a magnetic flux density of a detection-purpose magnetic field generated by the permanent magnet part 17 (see FIG. 1). In this embodiment, the full-open position θₘ is different from the rotation limit position θₑ. This configuration is one example of the present teaching. In the present teaching, it may be acceptable that the full-open position θₘ is coincident with the rotation limit position θₑ.

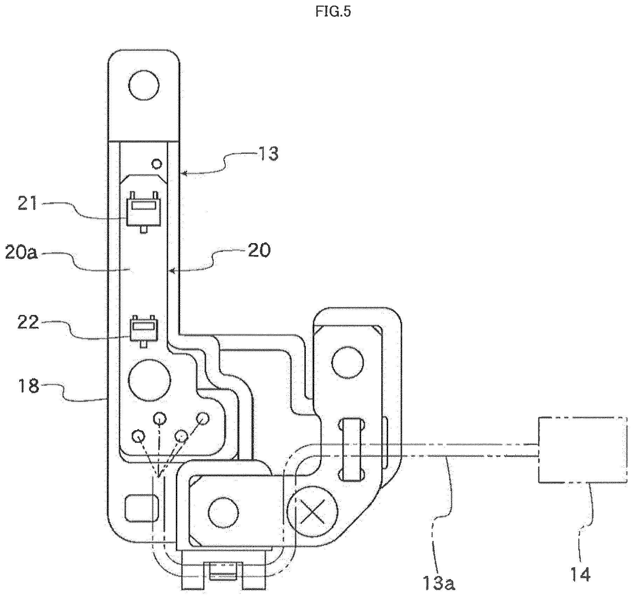

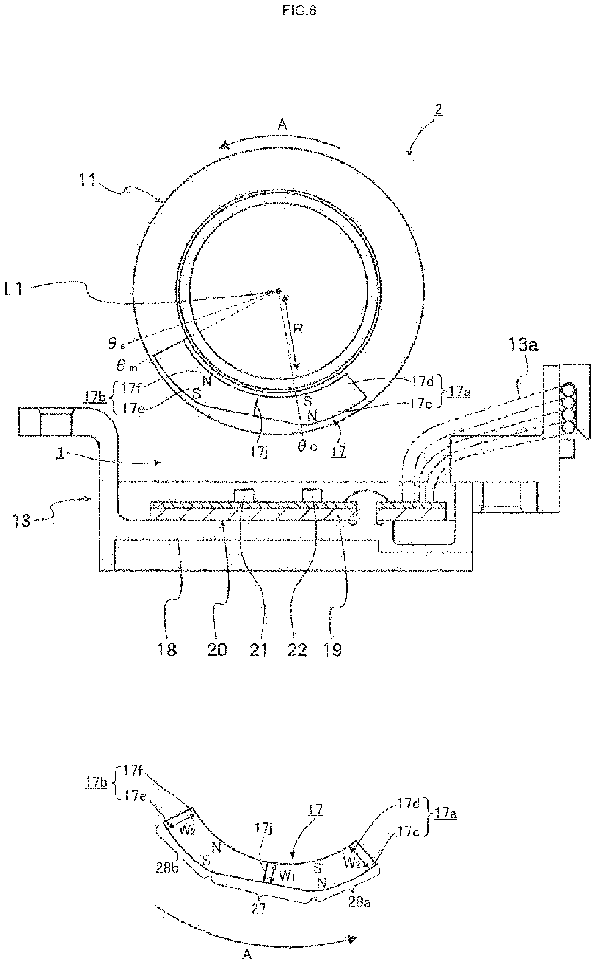

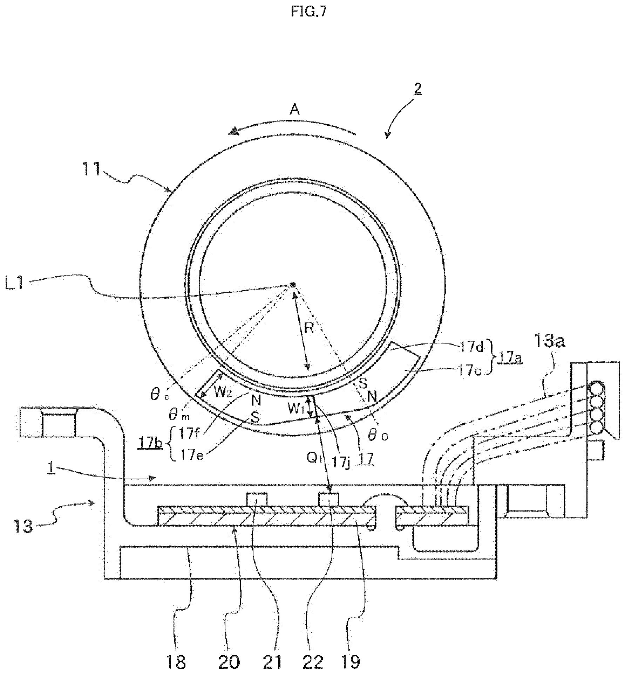

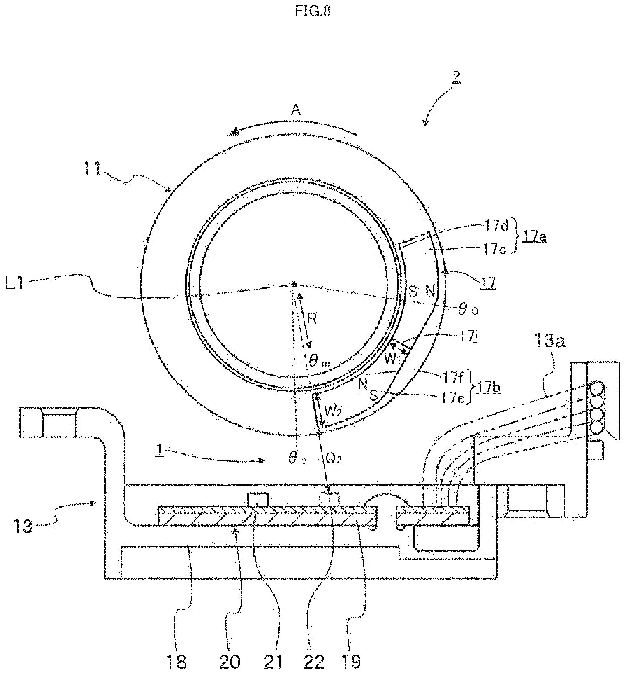

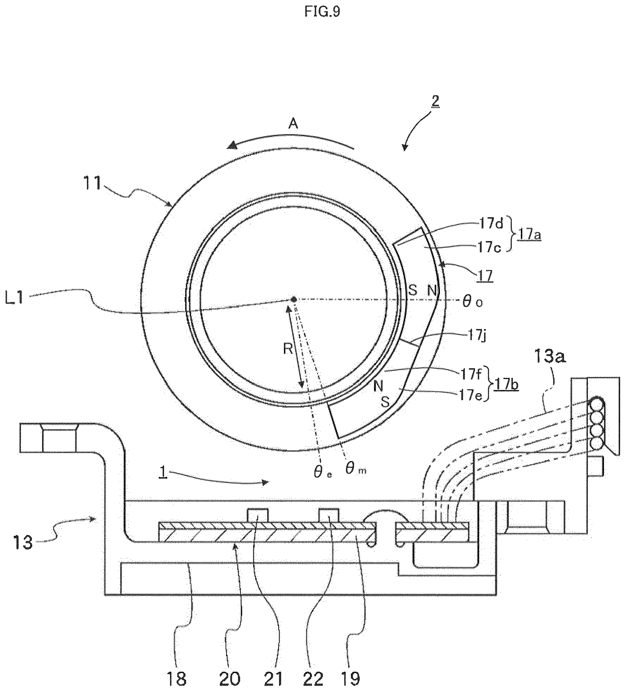

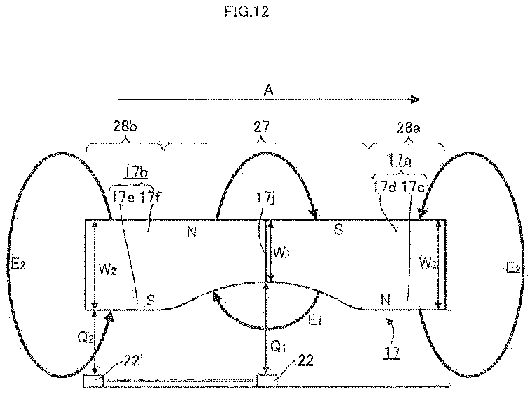

FIG. 5 is a plan view schematically showing the detection unit 13 according to the first embodiment. FIG. 6(a) is a cross-sectional view schematically showing an exemplary positional relationship of the permanent magnet part 17 to a digital Hall IC 21 and a linear Hall IC 22 according to the first embodiment. FIG. 6(b) is a cross-sectional view of the permanent magnet part 17. FIG. 7 through FIG. 9 are cross-sectional views each schematically showing an exemplary positional relationship of the permanent magnet part 17 to the digital Hall IC 21 and the linear Hall IC 22 according to the first embodiment. As the accelerator grip 11 is moved from the full-close position θₒ to the rotation limit position θₑ through the full-open position θₘ, the permanent magnet part 17 is displaced relative to the digital Hall IC 21 and the linear Hall IC 22 sequentially, as shown in FIG. 6(a), FIG. 7, FIG. 8, and FIG. 9. FIG. 6(a) shows the permanent magnet part 17 when the accelerator grip 11 is in the full-close position θₒ. FIG. 7 shows the permanent magnet part 17 when a middle portion 27 (see FIG. 6(b)) of the permanent magnet part 17 faces the linear Hall IC 22. FIG. 8 shows the permanent magnet part 17 when the accelerator grip 11 is in the full-open position θₘ. When the accelerator grip 11 is in the full-open position θₘ, a non-middle portion 28b (see FIG. 6(b)) of the permanent magnet part 17 faces the linear Hall IC 22. That is, the non-middle portion 28b is capable of facing the linear Hall IC 22. FIG. 9 shows the permanent magnet part 17 when the accelerator grip 11 is in the rotation limit position θₑ. The middle portion 27, for example, includes a boundary 17j, and includes a portion where a magnetic flux E₁ (see FIG. 12) flowing between a N-pole section 17c and a S-pole section 17e juxtaposed in the direction A flows in and out. A non-middle portion 28a, for example, is adjacent to the middle portion 27, and includes a portion where a magnetic flux E₂ (see FIG. 12) flowing between the N-pole section 17c and a S-pole section 17d juxtaposed in a radial direction R flows in and out. The non-middle portion 28b, for example, is adjacent to the middle portion 27, and includes a portion where a magnetic flux E₂ (see FIG. 12) flowing between a N-pole section 17f and the S-pole section 17e juxtaposed in the radial direction R flows in and out.

The description herein illustrates a case where the accelerator position sensor 2 detects the rotation angle of the accelerator grip 11 as the amount of relative displacement of the accelerator grip 11 to the housing 12 (support member). An object to be detected by the relative position detection device 1 is not limited to this example. In the description herein, an explanation concerning the position of the accelerator grip 11 relative to the linear Hall IC 22 is also applicable to the position of the permanent magnet part 17 relative to the linear Hall IC 22. For example, the phrase "when the accelerator grip 11 is in the full-open position θₘ" can be read as "when the permanent magnet part 17 is in the full-open position θₘ".

The linear Hall IC 22 is one example of the "magnetic sensor" of the present teaching. The digital Hall IC 21, as well as, the linear Hall IC 22 corresponds to the magnetic sensor. In the present teaching, the number of the magnetic sensors is not particularly limited. The relative position detection device 1 of the accelerator position sensor 2 of this embodiment includes the permanent magnet part 17 and the linear Hall IC 22 that are provided so as to be rotatable relative to each other. In the present teaching, the magnetic sensor is not limited to a linear Hall IC. The magnetic sensor may be a Hall effect sensor, for example.

The detection unit 13 is provided on a circuit board 20 in the shape of a flat plate. The circuit board 20 is supported on a board holder 18. The board holder 18 is secured to the housing piece 12a. In the circuit board 20, a magnetic substance 19 is buried. The magnetic substance 19 is made of a metal such as iron. It may be acceptable that the circuit board 20 itself serves as a magnetic substance. It may also be acceptable that a magnetic substance is provided below the circuit board 20. This way, the digital Hall IC 21 and the linear Hall IC 22 are disposed between the magnetic substance 19 and the permanent magnet part 17. A magnetic flux of the detection-purpose magnetic field generated by the permanent magnet part 17 is collected toward the magnetic substance 19. As a result, the magnetic flux density is easily detected by the digital Hall IC 21 and the linear Hall IC 22. In addition, an external magnetic flux is blocked by the magnetic substance 19. Occurrence of an erroneous operation is suppressed.

The circuit board 20 has a narrow width portion 20a as shown in FIG. 5. The narrow width portion 20a is disposed in the accommodation part 12c of the housing piece 12a. The digital Hall IC 21 and the linear Hall IC 22 which constitute the detection unit 13 are provided in the narrow width portion 20a. The digital Hall IC 21 is arranged so as to face the permanent magnet part 17 with a gap therebetween. The linear Hall IC 22 is arranged so as to face the permanent magnet part 17 with a gap therebetween. The digital Hall IC 21 and the linear Hall IC 22 are aligned at an interval in a relative rotation direction A in which the permanent magnet part 17 is rotated relative to the digital Hall IC 21 and the linear Hall IC 22, as shown in FIG. 6(a). The direction A is the same as a rotation direction of the accelerator grip 11. The digital Hall IC 21 and the linear Hall IC 22 are aligned in a direction perpendicular to the rotation axis line L1 of the accelerator grip 11. The digital Hall IC 21 and the linear Hall IC 22 are configured to detect a magnetic flux density of the permanent magnet part without contacting the permanent magnet part 17. The direction A is one example of the relative displacement direction in which the permanent magnet part 17 is displaced relative to the linear Hall IC 22.

The permanent magnet part 17 includes two magnetic pole parts 17a, 17b. The permanent magnet part 17 is physically integrally prepared so as to include the two magnetic pole parts 17a, 17b. The two magnetic pole parts 17a, 17b are adjacent to each other in the relative rotation direction A. The two magnetic pole parts 17a, 17b are in contact with each other. The magnetic pole part 17a is on the downstream side with respect to the direction A in which the accelerator grip 11 is rotated from the full-close position θₒ to the full-open position θₘ. The magnetic pole part 17b is on the upstream side with respect to the direction A. The magnetic pole part 17a and the magnetic pole part 17b are magnetized in the radial direction R of the accelerator grip 11. The magnetic pole part 17a has the N-pole section 17c and the S-pole section 17d. The N-pole section 17c is disposed outward in the radial direction R. The S-pole section 17d is disposed inward in the radial direction R. The magnetic pole part 17b has the S-pole section 17e and the N-pole section 17f. The S-pole section 17e is disposed outward in the radial direction R. The N-pole section 17f is disposed inward in the radial direction R. That is, the permanent magnet part 17 is configured such that the N-pole section 17c and the S-pole section 17e are juxtaposed in the direction A which is oriented from the full-close position θₒ toward the full-open position θₘ. The radial direction R is one example of the facing direction in which the permanent magnet part 17 and the linear Hall IC 22 face each other.

The permanent magnet part 17, for example, has a substantially arc-like shape with its width being substantially constant. The permanent magnet part 17 is made of a permanent magnet as a material being processed into such a shape that the thickness is reduced in a portion including the boundary 17j between the two magnetic pole parts 17a, 17b. As shown in FIG. 6(b), the permanent magnet part 17 includes the middle portion 27 and the two non-middle portions 28a, 28b. In this embodiment, the middle portion 27 is a portion whose thickness is reduced as compared to the thickness of the permanent magnet as a material. The non-middle portions 28a, 28b are portions in which the thickness of the permanent magnet as a material is substantially maintained. The thickness of the permanent magnet part 17 is defined on the basis of the radial direction R. The width of the permanent magnet part 17 is defined on the basis of the direction of the rotation axis line L1.

The middle portion 27 includes the boundary 17j between the two magnetic pole parts 17a, 17b. The two non-middle portions 28a, 28b are adjacent to the respective sides of the middle portion 27 in the direction A. The non-middle portion 28a is on the downstream side of the middle portion 27 in the direction A. The non-middle portion 28b is on the upstream side of the middle portion 27 in the direction A. On the basis of the full-close position θₒ, the amount of relative displacement (rotation angle) between the linear Hall IC 22 and the permanent magnet part 17, at a time when the linear Hall IC 22 faces the non-middle portion 28b, is greater than the amount of relative displacement (rotation angle) between the linear Hall IC 22 and the permanent magnet part 17 at a time when the linear Hall IC 22 faces the middle portion 27. The middle portion 27 and the non-middle portion 28b having such a relationship satisfy at least one of the cross-sectional area requirement and the distance requirement.

The thickness W₁ of the middle portion 27 is smaller than the thickness W₂ of the non-middle portion 28a. The thickness W₁ of the middle portion 27 is smaller than the thickness W₂ of the non-middle portion 28b. In the permanent magnet part 17, the width of the middle portion 27 is the same as the width of the non-middle portions 28a, 28b. The cross-sectional area of the middle portion 27 is smaller than the cross-sectional area of the non-middle portion 28a. The cross-sectional area of the middle portion 27 is smaller than the cross-sectional area of the non-middle portion 28b. The permanent magnet part 17 is configured to satisfy the cross-sectional area requirement. The cross-sectional area recited herein means a cross-sectional area on a plane perpendicular to the direction A. The cross-sectional area recited herein means a cross-sectional area of the actually existing permanent magnet part 17. Thus, the cross-sectional area of the present teaching has a value greater than zero.

As shown in FIG. 7 and FIG. 8, the thickness of the permanent magnet part 17 progressively increases from the middle portion 27 toward the non-middle portion 28b. Accordingly, the cross-sectional area of the permanent magnet part 17 progressively increases from the middle portion 27 toward the non-middle portion 28b. In the present teaching, it is not necessary that the boundary between the middle portion and the non-middle portion is clearly defined. In other words, it suffices that the permanent magnet part 17 has a portion (middle portion 27) where the boundary 17j between the two magnetic pole parts 17a and 17b exits and a portion (non-middle portion 28b) where at least one of the cross-sectional area requirement and the distance requirement can be satisfied. Here, the permanent magnet part 17 may be configured as a combination of a plurality of magnet bodies having magnetic pole parts magnetized in the radial direction R. The two magnetic pole parts 17a, 17b are adjacent to each other, but in the present teaching, two neighboring magnetic pole parts need not always be in contact with each other.

The distance Q₁ between the middle portion 27 and the linear Hall IC 22 at a time when the middle portion 27 and the linear Hall IC 22 are aligned in the radial direction R is longer than the distance Q₂ between the non-middle portion 28b and the linear Hall IC 22 at a time when the non-middle portion 28b and the linear Hall IC 22 are aligned in the radial direction R (see FIG. 7 and FIG. 8). The permanent magnet part 17 is configured to satisfy the distance requirement. The distance between the permanent magnet part 17 and the linear Hall IC 22 progressively decreases from the middle portion 27 toward the non-middle portion 28b.

In the state shown in FIG. 6, the digital Hall IC 21 is arranged so as to be substantially aligned in the radial direction R with the boundary 17j between the two magnetic pole parts 17a, 17b of the permanent magnet part 17. To be exact, a play in the accelerator grip 11 is provided in the vicinity of the full-close position θₒ. The digital Hall IC 21 is, therefore, arranged at a position corresponding to the vicinity of the boundary 17j and slightly shifted to the N-pole section 17c side.

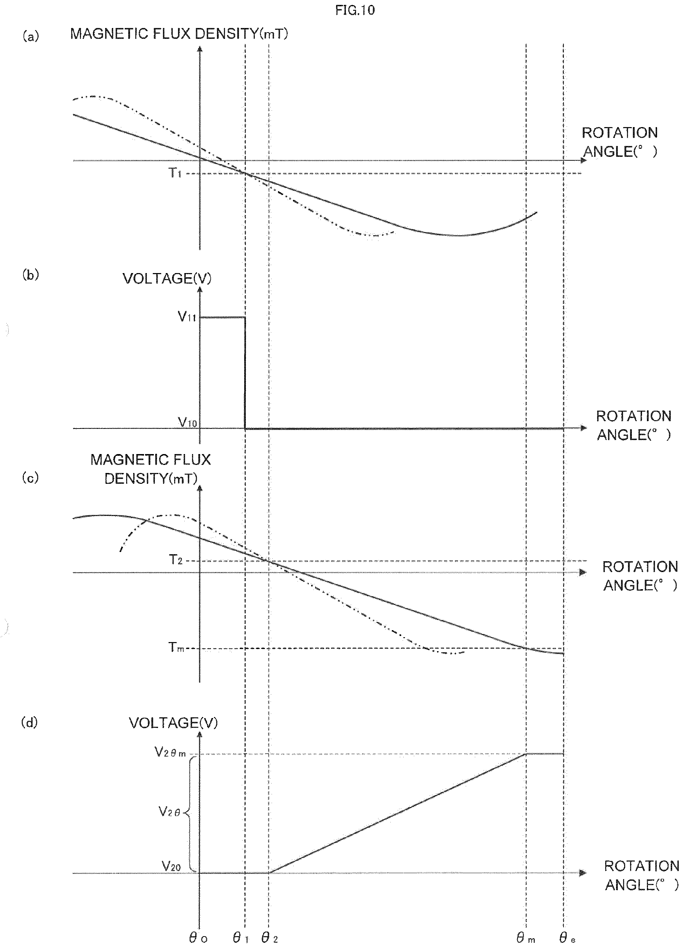

FIG. 10(a) is a graph showing a variation in the magnetic flux density at the position of the digital Hall IC 21 according to the first embodiment. FIG. 10(b) is a graph showing a change in a first detection signal outputted from the digital Hall IC 21. FIG. 10(c) is a graph showing a variation in the magnetic flux density at the position of the linear Hall IC 22 according to the first embodiment. FIG. 10(d) is a graph showing a change in a second detection signal outputted from the linear Hall IC 22. In FIGS. 10(a) and 10(c), the solid lines indicate magnetic flux densities in the first embodiment. The two-dot chain lines indicate magnetic flux densities in Patent Literature 1 as a comparative example. A positive value of the magnetic flux density indicates the magnetic flux density of a magnetic flux flowing in such a direction as to enter a magnetosensitive surface of the Hall IC. A negative value of the magnetic flux density indicates the magnetic flux density of a magnetic flux flowing in such a direction as to be emitted from the magnetosensitive surface of the Hall IC. This means that the Hall IC detects the magnetic flux density unless the magnetic flux density is zero.

When the accelerator grip 11 is rotated from the full-close position θₒ to the rotation limit position θₑ through the full-open position θₘ, the magnetic flux density received by the digital Hall IC 21 varies as shown in FIG. 10(a). The digital Hall IC 21 is configured to receive, substantially, all of the time, a magnetic force from the permanent magnet part 17 over an entire range where the accelerator grip 11 and the housing 12 are displaced relative to each other. Here, by using the term "substantially", it is meant that a position where the orientation of the magnetic flux (whether the magnetic flux density is positive or negative) is switched may be excluded from "all of the time". The position where the orientation of the magnetic flux (whether the magnetic flux density is positive or negative) is switched is extremely small, and its influence is negligible. Since the digital Hall IC 21 receives the magnetic force substantially all of the time, a magnetic force applied from outside is less influential, if any. As a result, occurrence of an erroneous operation is suppressed. Here, the digital Hall IC 21 may be configured to receive, substantially all of the time, a magnetic force of the permanent magnet part 17 when the accelerator grip 11 is displaced from the full-close position θₒ to at least the full-open position θₘ.

If the magnetic flux density detected by the digital Hall IC 21 is equal to or more than a predetermined threshold value T₁, the digital Hall IC 21 outputs a first detection signal of voltage V₁₁. If the magnetic flux density detected by the digital Hall IC 21 is less than the threshold value T₁, the digital Hall IC 21 outputs a first detection signal of voltage V₁₀. Herein, the voltage Vio is 0V. Although the threshold value T₁ is a negative value in this embodiment, the present teaching is not limited to this example.

As shown in FIG. 6(a), when the accelerator grip 11 is in the full-close position θₒ, the linear Hall IC 22 faces the N-pole section 17c of the permanent magnet part 17. As shown in FIG. 8, when the accelerator grip 11 is in the full-open position θₘ, the linear Hall IC 22 faces the S-pole section 17e of the permanent magnet part 17. This way, when the accelerator grip 11 is rotated from the full-close position θₒ to the full-open position θₘ, the magnetic flux density received by the linear Hall IC 22 varies as shown in FIG. 10(c). The magnetic flux density shown in FIG. 10 monotonically varies as the angle θ which is the rotation angle of the accelerator grip 11 increases.

Thus, the linear Hall IC 22 is arranged at such a position that the magnetic flux density received by the linear Hall IC 22 monotonically varies when the accelerator grip 11 is rotated from the full-close position θₒ to the rotation limit position θₑ. In the present teaching, it may also be acceptable that the linear Hall IC 22 is arranged at such a position that the magnetic flux density received by the linear Hall IC 22 monotonically varies when the accelerator grip 11 is rotated from the full-close position θₒ to at least the full-open position θₘ.

In this embodiment, the position where the magnetic flux density monotonically varies is a position where the magnetic flux density monotonically decreases. The present teaching, however, is not limited to this example. The position where the magnetic flux density monotonically varies may be a position where the magnetic flux density monotonically increases. The position where the magnetic flux density monotonically decreases is a position where the magnetic flux density detected by the linear Hall IC 22 decreases without ever reaching a minimum value when the accelerator grip 11 is displaced from the full-close position θₒ to the full-open position θₘ. The position where the magnetic flux density monotonically increases is a position where the magnetic flux density detected by the linear Hall IC 22 increases without ever reaching a maximum value when the accelerator grip 11 is displaced from the full-close position θₒ to the full-open position θₘ. The monotonic variation in the magnetic flux density may be a progressive increase or a progressive decrease in the magnetic flux density.

If the magnetic flux density detected by the linear Hall IC 22 is equal to or more than a predetermined threshold value T₂, the linear Hall IC 22 outputs a second detection signal of voltage V₂₀. Herein, the voltage V₂₀ is 0V. If the magnetic flux density detected by the linear Hall IC 22 is less than the predetermined threshold value T₂, the linear Hall IC 22 outputs a second detection signal of voltage V_{2θ} which is negatively proportional to the magnetic flux density. Since the voltage V_{2θ} is negatively proportional to the magnetic flux density, an increase in the voltage V_{2θ} relative to a decrease in the magnetic flux density exhibits linearity. When the accelerator grip 11 is in the full-open position θₘ, the linear Hall IC 22 outputs a second detection signal of voltage V_{2θm}. Although the threshold value T₂ is a positive value in this embodiment, the present teaching is not limited to this example.

In the linear Hall IC 22, an upper limit value and a lower limit value of the detectable magnetic flux density are set. The "upper limit value" is a positive value. The "lower limit value" is a negative value. FIG. 10(c) shows a lower limit value Tₘ of the detectable magnetic flux density. The linear Hall IC 22 is arranged at such a position that a magnetic flux density having the lower limit value Tₘ is received from the permanent magnet part 17 when the accelerator grip 11 is in the full-open position θₘ.

The linear Hall IC 22 does not detect a negative magnetic flux density less than the predetermined lower limit value Tₘ. If the linear Hall IC 22 receives a negative magnetic flux density less than the predetermined lower limit value Tₘ, the linear Hall IC 22 outputs the second detection signal of voltage V_{2θm}.

The control unit 14 receives a first detection signal (FIG. 10(b)) from the digital Hall IC 21. The control unit 14 receives a second detection signal (FIG. 10(d)) from the linear Hall IC 22. When the voltage of the first detection signal is V₁₀ and the voltage of the second detection signal is more than V₂₀, the control unit 14 outputs a control signal corresponding to the voltage of the second detection signal to the driving source control unit 16. Based on the control signal, the driving source control unit 16 operates a motor (not shown) serving as a driving source of an electric motorcycle.

If a requirement that the voltage of the first detection signal be V₁₀ and the voltage of the second detection signal be more than V₂₀ is not satisfied, the control unit 14 controls the driving source control unit 16 such that power supply to the motor is not performed. To be specific, for example, the control unit 14 transmits a control signal for stopping the power supply to the motor. For example, the control unit 14 stops transmission of a control signal for operating the motor to the driving source control unit 16.

Controlling the motor by the driving source control unit 16 of the electric motorcycle including the accelerator position sensor 2 according to the first embodiment will be described with reference to FIGS. 10(a) to 10(d).

When the accelerator grip 11 is between the full-close position θₒ and the rotation angle θ₁, the magnetic flux density at the position of the digital Hall IC 21 is equal to or more than the threshold value T₁, as shown in FIG. 10(a). The digital Hall IC 21, therefore, outputs the first detection signal of voltage V₁₁, as shown in FIG. 10(b). At this time, the magnetic flux density at the position of the linear Hall IC 22 is equal to or more than the threshold value T₂, as shown in FIG. 10(c). The linear Hall IC 22, therefore, outputs the second detection signal of voltage V₂₀, as shown in FIG. 10(d). The control unit 14 receives the first detection signal of voltage V₁₁ and the second detection signal of voltage V₂₀ via the detection signal wiring 13a. Thus, the control unit 14 transmits the control signal for stopping the power supply to the motor to the driving source control unit 16 via the control signal wiring 14a.

When the accelerator grip 11 is between the rotation angle θ₁ and the rotation angle θ₂, the magnetic flux density at the position of the digital Hall IC 21 has a negative value less than the threshold value T₁, as shown in FIG. 10(a). The digital Hall IC 21, therefore, outputs the first detection signal of voltage V₁₀, as shown in FIG. 10(b). At this time, the magnetic flux density at the position of the linear Hall IC 22 is equal to or more than the threshold value T₂, as shown in FIG. 10(c). The linear Hall IC 22, therefore, outputs the second detection signal V₂₀, as shown in FIG. 10(d). Thus, the control unit 14 transmits the control signal for stopping the power supply to the motor to the driving source control unit 16.

When the accelerator grip 11 is between the rotation angle θ₂ and the full-open position θₘ, the magnetic flux density at the position of the digital Hall IC 21 has a negative value less than the threshold value T₁, as shown in FIG. 10(a). The digital Hall IC 21, therefore, outputs the first detection signal of voltage V₁₀, as shown in FIG. 10(b). At this time, the magnetic flux density at the position of the linear Hall IC 22 is less than T₂, as shown in FIG. 10(c). The linear Hall IC 22, therefore, outputs the second detection signal of voltage V_{2θ}, as shown in FIG. 10(d). The second detection signal of voltage V_{2θ} is transmitted to the control unit 14 via the detection signal wiring 13a. Thus, the control unit 14 outputs a control signal corresponding to the second detection signal of voltage V_{2θ} to the driving source control unit 16. Based on the control signal corresponding to the second detection signal of voltage V_{2θ}, the driving source control unit 16 operates the motor.

When the accelerator grip 11 is in the full-open position θₘ, the digital Hall IC 21 outputs the first detection signal of voltage V₁₀. At this time, the linear Hall IC 22 outputs the second detection signal of voltage V_{2θm}. The control unit 14 outputs a control signal corresponding to the second detection signal of voltage V_{2θm} to the driving source control unit 16. Based on the control signal corresponding to the second detection signal of voltage V_{2θm}, the driving source control unit 16 operates the motor.

When the accelerator grip 11 is in the rotation limit position θₑ, the digital Hall IC 21 outputs the first detection signal of voltage V₁₀. At this time, the magnetic flux density at the position of the linear Hall IC 22 has a negative value less than the lower limit value Tₘ, as shown in FIG. 10(c). Here, the linear Hall IC 22 does not detect a magnetic flux density less than the lower limit value Tₘ. Thus, the linear Hall IC 22 outputs the second detection signal of voltage V_{2θm}, as shown in FIG. 10(d). The second detection signal of voltage V_{2θm} is transmitted to the control unit 14 via the detection signal wiring 13a. The control unit 14 accordingly outputs a control signal corresponding to the second detection signal of voltage V_{2θm} to the driving source control unit 16. Based on the control signal corresponding to the second detection signal of voltage V_{2θm}, the driving source control unit 16 operates the motor. In this embodiment, as thus far described, the linear Hall IC 22 outputs the second detection signal of voltage V_{2θm} which corresponds to the full-open position θₘ when the accelerator grip 11 is in the range from the full-open position θₘ to the rotation limit position θₑ.

As shown in FIGS. 10(a) to 10(d), when the rotation angle of the accelerator grip 11 is more than θ₂, the motor is controlled based on the second detection signal of voltage V_{2θ}. When the rotation angle of the accelerator grip 11 is less than θ₂, the power supply to the motor is stopped. When the accelerator grip 11 is displaced from the full-close position θₒ to the full-open position θₘ, the linear Hall IC 22 is displaced from a position aligned with the middle portion 27 in the radial direction R to a position aligned with the non-middle portion 28b in the radial direction R. The present teaching is not limited to this example. The linear Hall IC 22 may be configured to be displaced from a position aligned with the non-middle portion 28a in the radial direction R to a position aligned with the non-middle portion 28b in the radial direction R when the accelerator grip 11 is displaced from the full-close position θₒ to the full-open position θₘ, for example.

When the accelerator grip 11 is in the full-close position θₒ, the linear Hall IC 22 is closer to the middle portion 27 than to the non-middle portion 28b which is on the upstream side in the direction A. When the accelerator grip 11 is in the full-open position θₘ, the linear Hall IC 22 is closer to the non-middle portion 28b than to the middle portion 27.

This way, the accelerator position sensor 2 detects the rotation angle of the accelerator grip 11 based on a combination of the first detection signal and the second detection signal. If an erroneous operation occurs in either the digital Hall IC 21 or the linear Hall IC 22, the control unit 14 outputs a control signal for stopping power supply to the motor. Accordingly, the reliability of detection of the amount of relative displacement can be obtained.

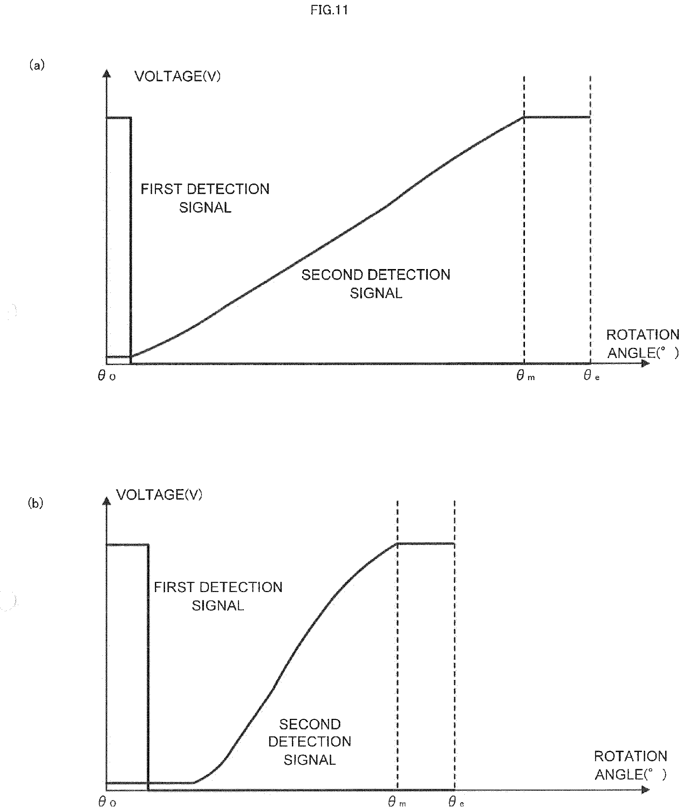

As shown in FIG. 10(a) and FIG. 10(c), the variation in the magnetic flux density of the first embodiment (solid lines) is more gradual over a wide range than the variation in the magnetic flux density of the comparative example (two-dot chain lines). This is why a significant difference occurs between the first and second detection signals of the first embodiment and the first and second detection signals of the comparative example. The difference will be described with reference to FIG. 11(a) and FIG. 11(b).

FIG. 11(a) is a graph showing the relationship of the first detection signal and the second detection signal to the rotation angle of the accelerator grip (permanent magnet part) of the accelerator position sensor according to the first embodiment. FIG. 11(b) is a graph showing the relationship of the first detection signal and the second detection signal to the rotation angle of the accelerator grip (permanent magnet part) of the accelerator position sensor according to the comparative example.

As shown in FIG. 11(a) and FIG. 11(b), the rotation angle at the full-open position θₘ of the first embodiment is greater than the rotation angle at the full-open position θₘ of the comparative example. The accelerator position sensor 2 is, therefore, able to easily and accurately detect the amount of relative displacement between the accelerator grip 11 and the handlebar 10 over a wide range. A change in the voltage of the second detection signal relative to the rotation angle in the first embodiment is smaller than a change in the voltage of the second detection signal relative to the rotation angle in the comparative example. The accelerator position sensor 2 is, therefore, able to increase the resolution in the amount of relative displacement between the accelerator grip 11 and the handlebar 10. As a result, the accelerator position sensor 2 of the first embodiment can provide a widened operation angle of the accelerator grip 11, and also can enable a delicate accelerator operation.

FIG. 12 is an explanatory diagram schematically showing magnetic fluxes of the permanent magnet part 17 of the accelerator position sensor 2 according to the first embodiment. In FIG. 12, for convenience of illustration, the permanent magnet part 17 is deformed into a linear shape though it actually has an arc-like shape. The permanent magnet part 17 is able to move relative to the linear Hall IC 22 in the direction A. FIG. 12 illustrates the state where the linear Hall IC 22 moves to the position of the linear Hall IC 22' as a result of relative movement between the permanent magnet part 17 and the linear Hall IC 22.

The thickness W₁ of the middle portion 27 is smaller than the thicknesses W₂ of the non-middle portions 28a, 28b. The width of the permanent magnet part 17 is fixed. The cross-sectional area of the middle portion 27 is smaller than the cross-sectional areas of the non-middle portions 28a, 28b. Thus, the magnetic flux density of the magnetic flux E₁ in the middle portion 27 is lower than the magnetic flux densities of the magnetic fluxes E₂ in the non-middle portions 28a, 28b. The magnetic flux E₁ in the middle portion 27 flows between the N-pole section 17c and the S-pole section 17e which are juxtaposed in the direction A. The magnetic flux E₂ in the non-middle portion 28a flows between the N-pole section 17c and the S-pole section 17d which are juxtaposed in the radial direction R. The magnetic flux E₂ in the non-middle portion 28b flows between the N-pole section 17f and the S-pole section 17e which are juxtaposed in the radial direction R. In other words, the magnetic flux density of the magnetic flux E₁, which flows between the two neighboring magnetic pole parts 17a, 17b in a region where the permanent magnet part 17 faces the linear Hall IC 22, is lower than the magnetic flux density of the magnetic flux E₂, which flows in each of the two magnetic pole parts 17a, 17b.

In this embodiment, the distance Q1 between the middle portion 28 and the linear Hall IC 22 is longer than the distance Q2 between the non-middle portion 28b and the linear Hall IC 22. The linear Hall IC 22 is, therefore, less likely to receive the magnetic flux E₁ flowing between the N-pole section 17c and the S-pole section 17e which are juxtaposed in the direction A, and less likely to receive the magnetic flux E₂ flowing between the N-pole section 17f and the S-pole section 17e which are juxtaposed in the radial direction R.

The linear Hall IC 22 is arranged so as to receive the magnetic flux E₁ and then receive the magnetic flux E₂ in the course of movement of the accelerator grip 11 from the full-close position θₒ to the full-open position θₘ. At this time, the linear Hall IC 22 receives magnetic fluxes in the order of the magnetic fluxes E₁→E₂. Accordingly, in this embodiment, a region where the magnetic flux density gradually varies can be prolonged, as shown in FIG. 10(c). Thus, the accelerator position sensor 2 of the first embodiment can provide a widened operation angle of the accelerator grip 11, and also can enable a delicate accelerator operation. In the present teaching, it may be acceptable that the linear Hall IC 22 is arranged so as to receive magnetic fluxes in the order of the magnetic fluxes E₂→E₁→E₂ in the course of movement of the accelerator grip 11 from the full-close position θₒ to the full-open position θₘ.

When the accelerator grip 11 is in the full-close position θₒ, the linear Hall IC 22 may face the non-middle portion 28a, may face the middle portion 27, or may face the non-middle portion 28b. When the accelerator grip 11 is in the full-open position θₘ, the linear Hall IC 22 may face the non-middle portion 28a, may face the middle portion 27, or may face the non-middle portion 28b. The full-close position θₒ and the full-open position θₘ illustrated in the embodiment are exemplary ones preferred in the present teaching. It is preferable that the linear Hall IC 22 faces the permanent magnet part 17 all of the time during movement of the accelerator grip 11 from the full-close position θₒ to the full-open position θₘ, as shown in the embodiment.

### [Second Embodiment]

Next, a second embodiment will be described. In the second embodiment, configurations corresponding to the configurations of the first embodiment will be given the same reference signs as of the first embodiment. The first embodiment and the second embodiment have the same configurations except the shape of the permanent magnet part 17. In the following, the permanent magnet part 17 will be mainly described.

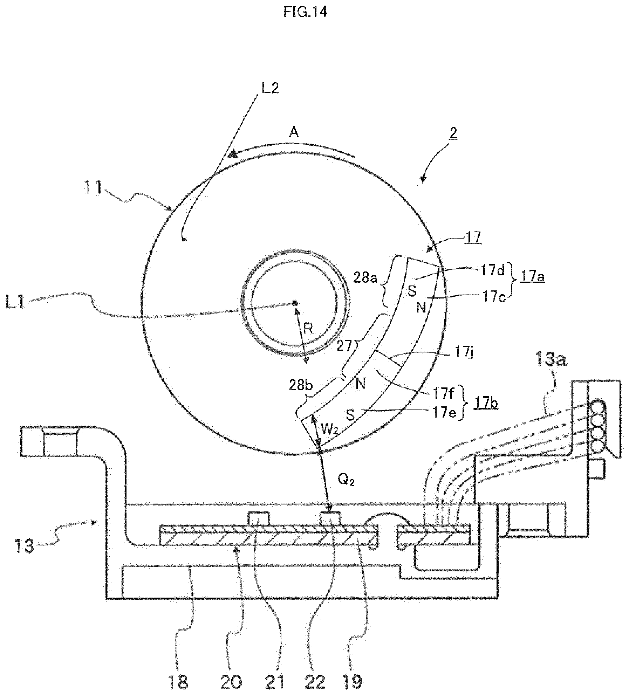

FIG. 13 and FIG. 14 are cross-sectional views each schematically showing an exemplary positional relationship of the permanent magnet part 17 to the digital Hall IC 21 and the linear Hall IC 22 according to the second embodiment. FIG. 13 shows the permanent magnet part 17 when the middle portion 27 of the permanent magnet part 17 faces the linear Hall IC 22. FIG. 14 shows the permanent magnet part 17 when the non-middle portion 28b of the permanent magnet part 17 faces the linear Hall IC 22.

The permanent magnet part 17 of the second embodiment has an arc-like shape centered on L2, which protrudes toward the linear Hall IC 22. The permanent magnet part 17 of the second embodiment has a fixed thickness. That is, the thickness W₁ of the middle portion 27 is equal to or substantially equal to the thicknesses W₂ of the non-middle portions 28a, 28b.

The center L2 of the arc-shaped permanent magnet part 17 is located at a position different from the position of the rotation axis line L1. As shown in FIG. 13, the distance between the permanent magnet part 17 and the center L2 is longer than the distance between the permanent magnet part 17 and the rotation axis line L1 with respect to the radial direction R. Thus, the permanent magnet part 17 is positioned eccentrically with respect to the accelerator grip 11. As a result, the distance Q1 between the middle portion 27 and the linear Hall IC 22 aligned in the radial direction is longer than the distance Q2 between the non-middle portion 28b and the linear Hall IC 22 aligned in the radial direction. The linear Hall IC 22 is, therefore, less likely to receive the magnetic flux E₁ flowing between the N-pole section 17c and the S-pole section 17e which are juxtaposed in the direction A, and less likely to receive the magnetic flux E₂ flowing between the N-pole section 17f and the S-pole section 17e which are juxtaposed in the radial direction R. Accordingly, in the second embodiment, a region where the magnetic flux density gradually varies can be prolonged. Thus, the accelerator position sensor 2 of the second embodiment can provide a widened operation angle of the accelerator grip 11, and also can enable a delicate accelerator operation.

While the first embodiment and the second embodiment have been described above, the present teaching is not limited to the above illustrations. For example, the present teaching can adopt the following configurations.

The positions of the magnetic poles in the first and second embodiments are exemplary ones of the present teaching. In the present teaching, S-pole and N-pole of the above-described illustration may be interchanged. To be specific, in the present teaching, the magnetic flux density may increase as the rotation angle (amount of relative displacement) increases, though FIGS. 10(a) and 10(c) illustrate the example in which the magnetic flux density decreases as the rotation angle (amount of relative displacement) increases. The magnetic sensor is, for example, configured to output a voltage proportional to the magnetic flux density. The proportionality herein may either be positive proportionality or negative proportionality. An output of the magnetic sensor has linearity with respect to a variation in the magnetic flux density. The magnetic sensor has an upper limit value and a lower limit value of the detectable magnetic flux density. In the present teaching, a change in the output (voltage) of the magnetic sensor relative to the amount of relative displacement between the permanent magnet part and the magnetic sensor is gradual over a wide range. Accordingly, even though the magnetic sensor has the upper limit value and the lower limit value of the detectable magnetic flux density, the amount of relative displacement between the permanent magnet part and the magnetic sensor can be easily and accurately detected over a wide range, and, moreover, the resolution in the amount of relative displacement can be increased.

The relative position detection device 1 detects the amount of relative displacement between a first member and a second member that are displaceable relative to each other. The permanent magnet part 17 is provided in the first member. The linear Hall IC 22 serving as the magnetic sensor is provided in the second member. The amount of relative displacement between the first member and the second member is detected based on detection of the amount of relative displacement between the permanent magnet part 17 and the linear Hall IC 22. In the accelerator position sensor 2 of the first and second embodiments, the housing 12 serving as "support member" is one example of the first member. The accelerator grip 11 is one example of the second member. It may be acceptable that the permanent magnet part 17 is provided in the housing 12 while the linear Hall IC 22 is provided in the accelerator grip 11. In the relative position detection device 1, configurations of the first member and the second member are not limited to the ones illustrated above, as long as they are displaceable relative to each other. That is, it is not always necessary that the relative position detection device 1 is provided in the accelerator position sensor 2.

As for the cross-sectional area requirement in the above-described embodiments, the width of the permanent magnet part 17 is fixed and common to the middle portion 27 and the non-middle portion 28b, but the thickness W of the permanent magnet part 17 differs between the middle portion 27 and the non-middle portion 28b. The thickness W₁ of the middle portion 27 is smaller than the thickness W₂ of the non-middle portion 28b. The present teaching, however, is not limited to this example. A configuration may be acceptable in which the thickness W of the permanent magnet part 17 is fixed and common to the middle portion 27 and the non-middle portion 28b but the width of the permanent magnet part 17 differs between the middle portion 27 and the non-middle portion 28b. In this configuration, the width of the middle portion 27 is smaller than the width of the non-middle portion 28b. The thickness and width of the permanent magnet part 17 may differ between the middle portion 27 and the non-middle portion 28b. In such a case, it suffices that the cross-sectional area of the middle portion 27 is smaller than the cross-sectional area of the non-middle portion 28b.

In the first embodiment, the middle portion 27, and the non-middle portion 28b of the magnetic pole part 17b and the non-middle portion 28a of the magnetic pole part 17a satisfy both the cross-sectional area requirement and the distance requirement. In the second embodiment, the middle portion 27, and the non-middle portion 28b of the magnetic pole part 17b and the non-middle portion 28a of the magnetic pole part 17a do not satisfy the cross-sectional area requirement, but satisfy the distance requirement. The present teaching, however, is not limited to this example. Another example may be possible in which the permanent magnet part 17 is configured such that the middle portion 27 and the non-middle portion 28b of the magnetic pole part 17b satisfy at least one requirement of the cross-sectional area requirement and the distance requirement. In the present teaching, however, it is preferable that the permanent magnet part 17 is configured such that the middle portion 27, and the non-middle portion 28b of the magnetic pole part 17b and the non-middle portion 28a of the magnetic pole part 17a satisfy at least one requirement of the cross-sectional area requirement and the distance requirement. In other words, it is preferable that the magnetic pole part 17a and the magnetic pole part 17b are substantially symmetric about the boundary 17j. Here, by using the term "substantially", it is meant that, for example, design tolerances and manufacturing errors are allowable.

In the first embodiment and the second embodiment, rotation of the permanent magnet part 17 about the rotation axis line L1 causes relative movement in the relative rotation direction A between the permanent magnet part 17 and the linear Hall IC 22 which face each other in the radial direction R. That is, there is a radial gap between the permanent magnet part 17 and the linear Hall IC 22. The relative rotation direction A is one example of the relative displacement direction in which the permanent magnet part 17 and the linear Hall IC 22 are displaced relative to each other. The radial direction R is one example of the facing direction in which the permanent magnet part 17 and the linear Hall IC 22 face each other. The present teaching, however, is not limited to this example. In the present teaching, there may be an axial gap between the permanent magnet part and the magnetic sensor. In such a configuration, the permanent magnet part and the magnetic sensor face each other in the rotation axis line direction. One of the permanent magnet part and the magnetic sensor rotates about the rotation axis line. As a result, the permanent magnet part and the magnetic sensor move relative to each other in the relative rotation direction. Here, the permanent magnet part and the magnetic sensor may be configured to linearly reciprocate relative to each other within a predetermined range.

In the embodiments described above, the accelerator position sensor 2 is provided with one detection system including one digital Hall IC 21 and one linear Hall IC 22. The present teaching, however, is not limited to this example. The accelerator position sensor may be provided with a plurality of detection systems. Even when one of the detection systems has a failure, the accelerator position sensor is able to continue the operation by using another detection system. In this case, each of the detection systems includes at least one magnetic sensor. Herein, the at least one magnetic sensor is exemplified by at least one digital Hall IC. The at least one magnetic sensor is also exemplified by at least one digital Hall IC and at least one linear Hall IC.

The embodiments and variations can be combined as appropriate. It should be understood that the terms and expressions used herein are for descriptions and not to be construed in a limited manner, do not eliminate any equivalents of features shown and mentioned herein, and allow various modifications falling within the claimed scope of the present invention. The present invention may be embodied in many different forms. The present disclosure is to be considered as providing embodiments of the principles of the invention. The embodiments are described herein with the understanding that such embodiments are not intended to limit the invention to preferred embodiments described herein and/or illustrated herein. The embodiments described herein are not limiting. The present invention includes any and all embodiments having equivalent elements, modifications, omissions, combinations, adaptations and/or alterations as would be appreciated by those in the art based on the present disclosure. The limitations in the claims are to be interpreted broadly based on the language employed in the claims and not limited to embodiments described herein or during the prosecution of the present application.

### Reference Signs List

- 1: relative position detection device
- 2: accelerator position sensor
- 10: handlebar
- 11: accelerator grip
- 12: housing (support member)
- 13: detection unit
- 14: control unit
- 17: permanent magnet part
- 17a, 17b: magnetic pole part
- 19: magnetic substance
- 21: digital Hall IC
- 22: linear Hall IC (magnetic sensor)
- 27: middle portion
- 28: non-middle portion
- V₁₀, V₁₁: first detection signal
- V₂₀, V_{2θ}, V_{2θm}: second detection signal
- θₒ: full-close position
- θₘ: full-open position
- θₑ: rotation limit position

## Claims

1. A relative position detection device (1) comprising a permanent magnet part (17) and a magnetic sensor (22) that are arranged so as to be displaceable relative to each other,
the magnetic sensor (22) facing the permanent magnet part (17) with a gap therebetween, being configured to detect a variation in a magnetic flux density of the permanent magnet part (17) without contacting the permanent magnet part (17), and having an upper limit value and a lower limit value of a detectable magnetic flux density,
the permanent magnet part (17) having at least two magnetic pole parts (17a, 17b), each of the two magnetic pole parts (17a, 17b) being magnetized in a facing direction in which the permanent magnet part (17) and the magnetic sensor (22) face each other such that each of the two magnetic pole parts (17a, 17b) has a N-pole and a S-pole juxtaposed in the facing direction,
the permanent magnet part (17) being configured such that the two magnetic pole parts (17a, 17b) are juxtaposed in a relative displacement direction in which the permanent magnet part (17) and the magnetic sensor (22) are displaced relative to each other and such that magnetic poles of the respective two magnetic pole parts (17a, 17b) facing the magnetic sensor (22) have different polarities,
the permanent magnet part (17) having a middle portion (27) including a boundary between the two magnetic pole parts (17a, 17b) and two non-middle portions (28a, 28b) adjacent to the respective sides of the middle portion (27) in the relative displacement direction, the permanent magnet part (17) being configured such that at least one of the non-middle portions (28a, 28b) faces the magnetic sensor (22) when the permanent magnet part (17) and the magnetic sensor (22) are displaced relative to each other,
the permanent magnet part (17) being configured such that the middle portion (27) and, of the two non-middle portions (28a, 28b), the non-middle portion (28a, 28b) capable of facing the magnetic sensor (22) satisfy a requirement concerning a cross-sectional area and a requirement concerning a distance to the magnetic sensor (22), and
the permanent magnet part (17) having an arc-like shape protruding toward the magnetic sensor (22), the permanent magnet part (17) and the magnetic sensor (22) having a radial gap therebetween, one of the permanent magnet part (17) and the magnetic sensor (22) being displaced relative to the other by a rotation about an axis line,
**characterized in that**
the requirement concerning the cross-sectional area being that a cross-sectional area of the middle portion (27) on a plane perpendicular to the relative displacement direction is smaller than a cross-sectional area of the non-middle portion (28a, 28b) on a plane perpendicular to the relative displacement direction, and
the requirement concerning the distance to the magnetic sensor (22) being that a distance between the middle portion (27) and the magnetic sensor (22) at a time when the middle portion (27) and the magnetic sensor (22) are aligned in the facing direction is longer than a distance between the non-middle portion (28a, 28b) and the magnetic sensor (22) at a time when the non-middle portion (28a, 28b) and the magnetic sensor (22) are aligned in the facing direction.

2. The relative position detection device (1) according to claim 1, wherein
the permanent magnet part (17) is configured such that the thickness of the middle portion (27) is smaller than the thickness of the non-middle portion (28a, 28b).

3. The relative position detection device (1) according to claim 1, wherein
the permanent magnet part (17) is configured such that the width of the middle portion (27) is smaller than the width of the non-middle portion (28a, 28b).

4. The relative position detection device (1) according to claim 1, wherein
the requirement concerning the distance to the magnetic sensor (22) is that a distance between the permanent magnet part (17) and the magnetic sensor (22) progressively decreases from the middle portion (27) toward the non-middle portion (28a, 28b), in addition to that a distance between the middle portion (27) and the magnetic sensor (22) at a time when the middle portion (27) and the magnetic sensor (22) are aligned in the facing direction is longer than a distance between the non-middle portion (28a, 28b) and the magnetic sensor (22) at a time when the non-middle portion (28a, 28b) and the magnetic sensor (22) are aligned in the facing direction.

5. The relative position detection device (1) according to claim 1, wherein
the requirement concerning the cross-sectional area is that a cross-sectional area of the permanent magnet part (17) on a plane perpendicular to the relative displacement direction progressively increases from the middle portion (27) toward the non-middle portion (28a, 28b), in addition to that a cross-sectional area of the middle portion (27) on a plane perpendicular to the relative displacement direction is smaller than a cross-sectional area of the non-middle portion (28a, 28b) on a plane perpendicular to the relative displacement direction.

6. The relative position detection device (1) according to claim 1, wherein
the non-middle portion (28a, 28b) includes an end portion of the permanent magnet part (17) in the relative displacement direction.

7. An accelerator position sensor (2) comprising:
the relative position detection device (1) according to any one of claims 1 to 6;
a support member (12) configured to be mounted on a handlebar (10), and provided with one of the permanent magnet part (17) and the magnetic sensor(22); and
an accelerator grip (11) configured to be displaceable relative to the support member (12), and provided with the other of the permanent magnet part (17) and the magnetic sensor (22),
the accelerator position sensor (2) being configured to detect a displacement of the accelerator grip (11) relative to the support member (12) by means of the relative position detection device (1).

8. A vehicle comprising the accelerator position sensor (2) according to claim 7.

## Patentansprüche

1. Eine Relativpositionserfassungsvorrichtung (1) mit einem Permanentmagnetteil (17) und einem Magnetsensor (22), die so angeordnet sind, dass sie relativ zueinander verschiebbar sind,
wobei der Magnetsensor (22) dem Permanentmagnetteil (17) mit einem Zwischenraum zwischen denselben gegenüberliegt, ausgebildet ist, um eine Variation einer Magnetflussdichte des Permanentmagnetteils (17) zu erfassen, ohne den Permanentmagnetteil (17) zu berühren, und einen oberen Grenzwert und einen unteren Grenzwert einer erfassbaren Magnetflussdichte aufweist,
wobei der Permanentmagnetteil (17) zumindest zwei Magnetpolteile (17a, 17b) aufweist, wobei jeder der beiden Magnetpolteile (17a, 17b) in einer zugewandten Richtung magnetisiert ist, in der der Permanentmagnetteil (17) und der Magnetsensor (22) einander zugewandt sind, so dass jeder der beiden Magnetpolteile (17a, 17b) einen N-Pol und einen S-Pol aufweist, die in der zugewandten Richtung nebeneinander angeordnet sind,
wobei der Permanentmagnetteil (17) derart ausgebildet ist, dass die beiden Magnetpolteile (17a, 17b) in einer Relativverschiebungsrichtung nebeneinander angeordnet sind, in der der Permanentmagnetteil (17) und der Magnetsensor (22) relativ zueinander verschoben werden, und derart, dass Magnetpole der jeweiligen beiden Magnetpolteile (17a, 17b), die dem Magnetsensor (22) zugewandt sind, unterschiedliche Polaritäten aufweisen,
wobei der Permanentmagnetteil (17) einen Mittelabschnitt (27), der eine Grenze zwischen den beiden Magnetpolteilen (17a, 17b) beinhaltet, und zwei Nicht-Mittelabschnitte (28a, 28b) benachbart zu den jeweiligen Seiten des Mittelabschnitts (27) in der Relativverschiebungsrichtung aufweist, wobei der Permanentmagnetteil (17) derart ausgebildet ist, dass zumindest einer der Nicht-Mittelabschnitte (28a, 28b) dem Magnetsensor (22) zugewandt ist, wenn der Permanentmagnetteil (17) und der Magnetsensor (22) relativ zueinander verschoben werden,
wobei der Permanentmagnetteil (17) derart ausgebildet ist, dass der Mittelabschnitt (27) und, von den beiden Nicht-Mittelabschnitten (28a, 28b), der Nicht-Mittelabschnitt (28a, 28b), der in der Lage ist, dem Magnetsensor (22) zugewandt zu sein, eine Anforderung bezüglich einer Querschnittsfläche und eine Anforderung bezüglich einer Entfernung zu dem Magnetsensor (22) erfüllen, und
wobei der Permanentmagnetteil (17) eine bogenartige Form aufweist, die in Richtung des Magnetsensors (22) vorsteht, wobei der Permanentmagnetteil (17) und der Magnetsensor (22) einen radialen Zwischenraum zwischen sich aufweisen, wobei einer des Permanentmagnetteils (17) und des Magnetsensors (22) relativ zu dem anderen durch Drehung um eine Achsenlinie verschoben wird,
**dadurch gekennzeichnet, dass**
die Anforderung bezüglich der Querschnittsfläche die ist, dass eine Querschnittsfläche des Mittelabschnitts (27) an einer Ebene senkrecht zu der Relativverschiebungsrichtung kleiner ist als eine Querschnittsfläche des Nicht-Mittelabschnitts (28a, 28b) an einer Ebene senkrecht zu der Relativverschiebungsrichtung und
die Anforderung bezüglich der Entfernung zu dem Magnetsensor (22) die ist, dass eine Entfernung zwischen dem Mittelabschnitt (27) und dem Magnetsensor (22) zu einer Zeit, zu der der Mittelabschnitt (27) und der Magnetsensor (22) in der zugewandten Richtung ausgerichtet sind, länger ist als eine Entfernung zwischen dem Nicht-Mittelabschnitt (28a, 28b) und dem Magnetsensor (22) zu einer Zeit, zu der der Nicht-Mittelabschnitt (28a, 28b) und der Magnetsensor (22) in der zugewandten Richtung ausgerichtet sind.

2. Die Relativpositionserfassungsvorrichtung (1) gemäß Anspruch 1, bei der
der Permanentmagnetteil (17) derart ausgebildet ist, dass die Dicke des Mittelabschnitts (27) kleiner ist als die Dicke des Nicht-Mittelabschnitts (28a, 28b).

3. Die Relativpositionserfassungsvorrichtung (1) gemäß Anspruch 1, bei der der Permanentmagnetteil (17) derart ausgebildet ist, dass die Breite des Mittelabschnitts (27) kleiner ist als die Breite des Nicht-Mittelabschnitts (28a, 28b).

4. Die Relativpositionserfassungsvorrichtung (1) gemäß Anspruch 1, bei der
die Anforderung bezüglich der Entfernung zu dem Magnetsensor (22) die ist, dass eine Entfernung zwischen dem Permanentmagnetteil (17) und dem Magnetsensor (22) progressiv von dem Mittelabschnitt (27) in Richtung des Nicht-Mittelabschnitts (28a, 28b) abnimmt, zusätzlich zu derjenigen, dass eine Entfernung zwischen dem Mittelabschnitt (27) und dem Magnetsensor (22) zu einer Zeit, zu der der Mittelabschnitt (27) und der Magnetsensor (22) in der zugewandten Richtung ausgerichtet sind, länger ist als eine Entfernung zwischen dem Nicht-Mittelabschnitt (28a, 28b) und dem Magnetsensor (22) zu einer Zeit, zu der der Nicht-Mittelabschnitt (28a, 28b) und der Magnetsensor (22) in der zugewandten Richtung ausgerichtet sind.

5. Die Relativpositionserfassungsvorrichtung (1) gemäß Anspruch 1, bei der
die Anforderung bezüglich der Querschnittsfläche die ist, dass eine Querschnittsfläche des Permanentmagnetteils (17) an einer Ebene senkrecht zu der Relativverschiebungsrichtung progressiv von dem Mittelabschnitt (27) in Richtung des Nicht-Mittelabschnitts (28a, 28b) zunimmt, zusätzlich zu derjenigen, dass eine Querschnittsfläche des Mittelabschnitts (27) an einer Ebene senkrecht zu der Relativverschiebungsrichtung kleiner ist als eine Querschnittsfläche des Nicht-Mittelabschnitts (28a, 28b) an einer Ebene senkrecht zu der Relativverschiebungsrichtung.

6. Die Relativpositionserfassungsvorrichtung (1) gemäß Anspruch 1, bei der
der Nicht-Mittelabschnitt (28a, 28b) einen Endabschnitt des Permanentmagnetteils (17) in der Relativverschiebungsrichtung aufweist.

7. Ein Beschleunigerpositionssensor (2), der folgende Merkmale aufweist:
die Relativpositionserfassungsvorrichtung (1) gemäß einem der Ansprüche 1 bis 6;
ein Trägerbauteil (12), das ausgebildet ist, um an einer Lenkerstange (10) befestigt zu sein, und an dem einer des Permanentmagnetteils (17) und des Magnetsensors (22) vorgesehen ist; und
ein Beschleunigergriff (11), der ausgebildet ist, um relativ zu dem Trägerbauteil (12) verschiebbar zu sein, und an dem der andere des Permanentmagnetteils (17) und des Magnetsensors (22) vorgesehen ist,
wobei der Beschleunigerpositionssensor (2) ausgebildet ist, um eine Verschiebung des Beschleunigergriffs (11) relativ zu dem Trägerbauteil (12) mittels der Relativpositionserfassungsvorrichtung (1) zu erfassen.

8. Ein Fahrzeug mit dem Beschleunigerpositionssensor (2) gemäß Anspruch 7.

## Revendications

1. Dispositif de détection de position relative (1) comprenant une partie d'aimant permanent (17) et un capteur magnétique (22) qui sont disposés de manière à pouvoir se déplacer l'un par rapport à l'autre,
le capteur magnétique (22) faisant face à la partie d'aimant permanent (17) avec un entrefer entre eux étant configuré pour détecter une variation de la densité de flux magnétique de la partie d'aimant permanent (17) sans entrer en contact avec la partie d'aimant permanent (17) et présentant une valeur limite supérieure et une valeur limite inférieure d'une densité de flux magnétique détectable,
la partie d'aimant permanent (17) présentant au moins deux parties de pôle magnétique (17a, 17b), chacune des deux parties de pôle magnétique (17a, 17b) étant aimantée dans une direction faisant face l'une à l'autre dans laquelle la partie d'aimant permanent (17) et le capteur magnétique (22) se font face de sorte que chacune des deux parties de pôle magnétique (17a, 17b) présente un pôle N et un pôle S juxtaposés dans la direction faisant face l'une à l'autre,
la partie d'aimant permanent (17) étant configurée de sorte que les deux parties de pôle magnétique (17a, 17b) soient juxtaposées dans une direction de déplacement relatif dans laquelle la partie d'aimant permanent (17) et le capteur magnétique (22) sont déplacés l'un par rapport à l'autre et de sorte que les pôles magnétiques des deux parties de pôle magnétique respectives (17a, 17b) faisant face au capteur magnétique (22) présentent des polarités différentes,
la partie d'aimant permanent (17) présentant une partie médiane (27) comportant une limite entre les deux parties de pôle magnétique (17a, 17b) et deux parties non médianes (28a, 28b) adjacentes aux côtés respectifs de la partie médiane (27) dans la direction de déplacement relatif, la partie d'aimant permanent (17) étant configurée de sorte qu'au moins une des parties non médianes (28a, 28b) fasse face au capteur magnétique (22) lorsque la partie d'aimant permanent (17) et le capteur magnétique (22) sont déplacés l'un par rapport à l'autre,
la partie d'aimant permanent (17) étant configurée de sorte que la partie médiane (27) et, parmi les deux parties non médianes (28a, 28b), la partie non médiane (28a, 28b) à même de faire face au capteur magnétique (22) remplisse une condition requise en ce qui concerne une surface de section et une condition requise en ce qui concerne une distance par rapport au capteur magnétique (22), et
la partie d'aimant permanent (17) présentant une forme d'arc faisant saillie vers le capteur magnétique (22), la partie d'aimant permanent (17) et le capteur magnétique (22) présentant un entrefer radial entre eux, l'un parmi la partie d'aimant permanent (17) et le capteur magnétique (22) étant déplacé par rapport à l'autre par une rotation autour d'une ligne d'axe,
**caractérisé par le fait que**
la condition requise en ce qui concerne une surface de section transversale est qu'une surface de section transversale de la partie médiane (27) dans un plan perpendiculaire à la direction de déplacement relatif soit inférieure à la surface de section transversale de la partie non médiane (28a, 28b) dans un plan perpendiculaire à la direction de déplacement relatif, et
la condition requise en ce qui concerne la distance par rapport au capteur magnétique (22) est qu'une distance entre la partie médiane (27) et le capteur magnétique (22) à un moment où la partie médiane (27) et le capteur magnétique (22) sont alignés dans la direction faisant face l'une à l'autre soit plus longue qu'une distance entre la partie non médiane (28a, 28b) et le capteur magnétique (22) à un moment où la partie non médiane (28a, 28b) et le capteur magnétique (22) sont alignés dans la direction faisant face l'une à l'autre.

2. Dispositif de détection de position relative (1) selon la revendication 1, dans lequel
la partie d'aimant permanent (17) est configurée de sorte que l'épaisseur de la partie médiane (27) soit inférieure à l'épaisseur de la partie non médiane (28a, 28b).

3. Dispositif de détection de position relative (1) selon la revendication 1, dans lequel
la partie d'aimant permanent (17) est configurée de sorte que la largeur de la partie médiane (27) soit inférieure à la largeur de la partie non médiane (28a, 28b).

4. Dispositif de détection de position relative (1) selon la revendication 1, dans lequel
la condition requise en ce qui concerne la distance par rapport au capteur magnétique (22) est qu'une distance entre la partie d'aimant permanent (17) et le capteur magnétique (22) diminue progressivement de la partie médiane (27) vers la partie non médiane (28a, 28b), en plus du fait que la distance entre la partie médiane (27) et le capteur magnétique (22) à un moment où la partie médiane (27) et le capteur magnétique (22) sont alignés dans la direction faisant face l'une à l'autre soit plus longue qu'une distance entre la partie non médiane (28a, 28b) et le capteur magnétique (22) à un moment où la partie non médiane (28a, 28b) et le capteur magnétique (22) sont alignés dans la direction faisant face l'une à l'autre.

5. Dispositif de détection de position relative (1) selon la revendication 1, dans lequel
la condition requise en ce qui concerne la surface de section transversale est qu'une surface de section transversale de la partie d'aimant permanent (17) dans un plan perpendiculaire à la direction de déplacement relatif augmente progressivement de la partie médiane (27) vers la partie non médiane (28a, 28b), en plus du fait que la surface de section transversale de la partie médiane (27) dans un plan perpendiculaire à la direction de déplacement relative soit inférieure à la surface de section transversale de la partie non médiane (28a, 28b) dans un plan perpendiculaire à la direction de déplacement relatif.

6. Dispositif de détection de position relative (1) selon la revendication 1, dans lequel
la partie non médiane (28a, 28b) comporte une partie d'extrémité de la partie d'aimant permanent (17) dans la direction de déplacement relatif.

7. Capteur de position d'accélérateur (2), comprenant:
le dispositif de détection de position relative (1) selon l'une quelconque des revendications 1 à 6;
un élément de support (12) configuré pour être monté sur un guidon (10) et pourvu de l'un parmi la partie d'aimant permanent (17) et le capteur magnétique (22); et
une poignée d'accélérateur (11) configurée de manière à être déplaçable par rapport à l'élément de support (12) et pourvue de l'autre parmi la partie d'aimant permanent (17) et le capteur magnétique (22),
le capteur de position d'accélérateur (2) étant configuré pour détecter un déplacement de la poignée d'accélérateur (11) par rapport à l'élément de support (12) au moyen du dispositif de détection de position relative (1).

8. Véhicule comprenant le capteur de position d'accélérateur (2) selon la revendication 7.
